Europäisches Patentamt

European Patent Office

Office européen des brevets

(11) Numéro de publication: **0 345 166**
A1

(12) **DEMANDE DE BREVET EUROPEEN**

(21) Numéro de dépôt: 89401520.5

(22) Date de dépôt: 02.06.89

(51) Int. Cl.⁴: **C 04 B 35/46**
H 01 G 4/12

(30) Priorité: 03.06.88 FR 8807404

(43) Date de publication de la demande:
06.12.89 Bulletin 89/49

(84) Etats contractants désignés: AT DE FR GB IT

(71) Demandeur: COMPAGNIE EUROPEENNE DE
COMPOSANTS ELECTRONIQUES LCC
50, rue Jean-Pierre Timbaud
F-92400 Courbevoie (FR)

(72) Inventeur: Bauger, Alain
THOMSON-CSF SCPI CEDEX 67
F-92045 Paris la Défense (FR)

Laurent, Michel
THOMSON-CSF SCPI CEDEX 67
F-92045 Paris la Défense (FR)

(74) Mandataire: Guérin, Michel et al
THOMSON-CSF SCPI
F-92045 PARIS LA DEFENSE CEDEX 67 (FR)

(54) Composition céramique à haute permittivité et condensateur utilisant cette composition.

(57) L'invention concerne une composition céramique à haute permittivité, à base de titanate de baryum, élaborée à partir d'un mélange comprenant en poids 59 à 67 %de BaCO₃ ,22 à 25 % de TiO₂, 2 à 6 % de CaCO₃, 0 à 1,1 % de SrCO₃, 5 à 11 % de ZrO₂ et des adjuvants permettant d'introduire dans la composition du manganèse et du cérium. Application à la fabrication de condensateurs céramique.

EP 0 345 166 A1

## Description

# COMPOSITION CERAMIQUE A HAUTE PERMITTIVITE ET CONDENSATEUR UTILISANT CETTE COMPOSITION.

La présente invention concerne des compositions céramiques du type 2 à haute permittivité et plus particulièrement des compositions de classe Z5U utilisées comme matériau diélectrique pour des condensateurs céramique du type disque ou du type multicouche.

Pour définir ce qu'est une céramique, on peut se rapporter à l'article de J-M HAUSSONNE paru dans les Techniques de l'Ingénieur, E 1820, p. 3 (mars 1986).

La définition en est la suivante :

"une céramique est un matériau inorganique polycristallin, présentant une microstructure complexe de grains et de joints de grains. Cette structure est définie lors du cycle d'élaboration, qui transforme des matières premières le plus souvent pulvérulentes en un matériau dense, idéalement exempt de pores, et dont les propriétés tiennent de celles de ses grains, mais aussi de son hétérogénéité. La phase technologique clé de l'élaboration d'une céramique est son frittage, qui est le cycle température-atmosphère-temps au cours duquel les grains initialement mis au contact les uns avec les autres par des opérations de mise en forme se lient à la suite de l'action de divers mécanismes de transport pour ensuite acquérir la microstructure recherchée".

Dans l'application aux condensateurs, on utilise bien sûr des céramiques isolantes, les céramiques conductrices étant réservées à d'autres applications : thermistances, varistances, résistances chauffantes, etc...

Les condensateurs céramique peuvent se classer en trois types qui se différencient à la fois par les matériaux constituant le diélectrique et par les caractéristiques électriques que possèdent ces condensateurs. Les condensateurs de type 1 présentent de faibles pertes en haute fréquence et un coefficient de température défini. Les condensateurs de type 2 possèdent une capacité volumique importante due à la permittivité élevée de la céramique formant leur diélectrique, mais cette permittivité élevée est généralement associée à une faible stabilité de la permittivité en fonction de la température (ce qui conduit à les répertorier dans des classes de température, par exemple Z5U) ainsi qu'à des pertes élevées. Les condensateurs de type 3 (ou condensateurs à couche d'arrêt) présentent des capacités très élevées, mais leurs tensions de service sont faibles.

Les céramiques de type 2 sont à base de titanate de baryum $BaTiO_3$ dont le cristal, de la famille des pérovskites, présente une transformation cristalline à 120°C (point de Curie) au cours de laquelle la constante diélectrique atteint la remarquable valeur de 18 000. Dans la pratique, en vue de parfaire la régularité de la constante diélectrique avec la température, on élabore ces céramiques à partir de diverses pérovskites syncristallisant, par exemple $BaTiO_3$ et $SrTiO_3$, ce qui a pour conséquence de déplacer le point de Curie vers les basses températures.

Ces céramiques présentent, en dessous du point de Curie, et donc pour les températures courantes d'utilisation, un édifice cristallin ferroélectrique qui est sensible aux mécanismes de conduction électrique engendrés lors du frittage. Ces phénomènes peuvent être inhibés par l'apport de cations particuliers qui bloquent les réactions de réduction du titane de la valence quatre à la valence trois. Il est bien connu de l'homme de l'art que le manganèse en substitution sur le site du titane permet de compenser les changements de valence éventuels de cet élément et ainsi de réduire les conductions parasites liées à la présence d'électrons libres.

Dans un condensateur multicouche où les épaisseurs de céramique sont de l'ordre de 25 $\mu$, la stabilité des propriétés électriques est fortement dépendante de l'aptitude à la réduction du titane constituant de l'édifice cristallin ferroélectrique. Les phénomènes de conduction auront effectivement une incidence importante si les épaisseurs du diélectrique sont faibles. La simple substitution du titane par le manganèse ne permet pas de diminuer suffisamment les pertes diélectriques qui demeurent élevées dans la structure du condensateur multicouche.

Afin de pallier ces inconvénients, l'invention propose une composition céramique dans laquelle des cations à la valence deux (baryum, strontium ou calcium) sont substitués par des cations de cérium à la valence trois ou quatre, conjointement à la substitution du titane par le manganèse. Une stoechiométrie judicieusement choisie pour les éléments de substitution permet alors d'obtenir une diminution considérable des pertes diélectriques tout en stabilisant la permittivité sur un plus large domaine de température.

L'invention a donc pour objet une composition céramique à haute permittivité, la composition étant à base de titanate de baryum, caractérisée en ce qu'elle est élaborée à partir d'un mélange comprenant en poids 59 à 67 % de carbonate de baryum, 22 à 25 % d'oxyde de titane, 2 à 6 % de carbonate de calcium, 0 à 1,1 % de carbonate de strontium, 5 à 11 % d'oxyde de zirconium, le mélange comprenant également des adjuvants permettant d'introduire dans la composition du manganèse et du cérium.

L'invention a également pour objet un condensateur comprenant en tant que diélectrique la composition céramique définie ci-dessus.

La composition selon l'invention est constituée par une phase principale choisie dans le diagramme $BaCO_3$ -$CaCO_3$ - $SrCO_3$ - $TiO_2$ - $ZrO_2$ et par des adjuvants permettant la stabilisation des propriétés électriques. Ces derniers sont constitués par du manganèse, introduit par exemple sous forme d'oxyde ou de nitrate, et par du cérium introduit par exemple sous forme d'oxyde.

De préférence, les rapports molaires dans les compositions seront les suivantes :
- pour le rapport molaire $TiO_2/BaO$ : de 0,91 à 0,97,
- pour le rapport molaire $BaO/CaO$: de 6 à 12,
- pour le rapport molaire $ZrO_2/CaO$ : de 1,4 à 2,
- pour le rapport molaire $TiO_2/ZrO_2$ : de 3 à 8,
- pour le rapport molaire $SrO/BaO$: de 0 à 0,03.

La composition selon l'invention peut être obtenue par un procédé classique bien connu de l'homme de l'art. Ce procédé comprend les étapes suivantes :

- une première étape consistant à peser les matières premières à partir desquelles la céramique sera élaborée : oxydes, carbonates, nitrates, etc...

- une seconde étape consistant à mélanger et à broyer les matières premières. Le broyage peut être effectué par un broyeur à tambour ou un attritor. Il se fait généralement en milieu aqueux et fournit une barbotine qui est ensuite séchée,

- une troisième étape de chamottage ou calcination qui consiste à faire subir au matériau pulvérulent obtenu à l'issue de la seconde étape, un cycle thermique destiné à former la phase cristalline recherchée,

- une quatrième étape au cours de laquelle le matériau obtenu à l'issue de la troisième étape est mis en forme, par exemple par pressage et en utilisant un liant organique,

- une cinquième étape de frittage du matériau précédemment mis en forme et qui permet d'obtenir la composition céramique désirée.

Selon un premier mode de réalisation préférentielle de l'invention, la composition céramique est constituée à partir d'une chamotte complexe de formule générale :

$Ba_{1-x-y} Ca_x Sr_y Ti_{1-z} Zr_z O_3$

où x varie de 0,06 à 0,15, y de 0 à 0,02 et z de 0,1 à 0,25. Cette chamotte complexe est réalisée par mélange des éléments suivants donnés en pourcentages pondéraux : 59 à 67 % de $BaCO_3$, 2 à 6 % de $CaCO_3$, 0 à 1 % de $SrCO_3$, 22 à 25 % de $TiO_2$ et 5 à 11 % de $ZrO_2$. La synthèse thermique de chamottage est effectuée à des températures comprises entre 1050°C et 1200°C pendant deux heures en atmosphère oxydante. A cette chamotte contenant Ba, Sr, Ca, Ti et Zr, on ajoute les adjuvants nécessaires Mn et Ce par exemple sous forme d'oxyde $Mn_3O_4$ et $CeO_2$. La chamotte représente 99,1 à 99,9 % en poids et les adjuvants sous forme d'oxyde 0,1 à 0,9 % en poids.

Selon un second mode de réalisation préférentielle de l'invention, la composition céramique est constituée à partir d'une chamotte complexe de formule générale :

$Ba_{1-x-y-u} Ca_x Sr_y Ce_u Ti_{1-z-v} Zr_z Mn_v O_3$

où x varie de 0,06 à 0,15, y varie de 0 à 0,02, u varie de 0,0015 à 0,003, z varie de 0,1 à 0,25 et v varie de 0,002 à 0,006. Cette chamotte complexe est donc réalisée par mélange des éléments suivants donnés en pourcentages pondéraux : 59 à 67 % de $BaCO_3$, 0 à 1,1 % de $SrCO_3$, 2 à 6 % de $CaCO_3$, 22 à 25 % de $TiO_2$, 5 à 11 % de $ZrO_2$, 0,1 à 0,3 % de $Mn_3O_4$ et 0,1 à 0,6 % de $CeO_2$. La synthèse thermique du chamottage est effectuée à des températures comprises entre 1050°C et 1200°C pendant 2 heures en atmosphère oxydante.

Le mélange réalisé à la deuxième étape permet d'obtenir une mixture suffisamment homogène pour permettre une réaction complète des éléments entre eux lors du chamottage et du frittage.

La poudre est pressée sous forme de disque, lors de l'étape de mise en forme, par l'intermédiaire d'un liant et le frittage est conduit en atmosphère oxydante à des températures comprises entre 1300°C et 1380°C.

On peut obtenir des condensateurs céramique multicouches par la technologie de coulage. Les électrodes déposées directement sur la céramique sont de préférence en alliage palladium-argent (70 % en poids de palladium) ou en palladium. Elles sont ensuite sérigraphiées à la surface des feuilles de céramique.

Les exemples suivants permettront d'apprécier les avantages des compositions selon l'invention.


Exemple 1

On réalise une composition diélectrique par mélange des carbonates de baryum et de calcium avec les oxydes de titane et de zirconium, ainsi que des oxydes de cérium et de manganèse.

Les proportions des principaux constituants sont fixées de manière à obtenir une solution solide dont les rapports de stoéchiométrie sont les suivants :

$TiO_2/BaO = 0,92$   $BaO/CaO = 7,47$   $ZrO_2/CaO = 1,70$

Les éléments de la composition sont mélangés en milieu aqueux. Le broyage est conduit dans un système de type attritor pendant une heure, avec les proportions suivantes : 50 % en poids de billes de zircone, 29 % en poids d'eau et 21 % en poids d'oxydes.

La barbotine est séchée et la poudre calcinée à des températures comprises entre 1050°C et 1200°C pendant deux heures.

Les compositions retenues comprennent en poids :

63,09 à 62,94 % de $BaCO_3$

23,5 à 23,44 % de $TiO_2$

8,96 à 8,935 % de $ZrO_2$

4,28 à 4,26 % de $CaCO_3$

0,17 à 0,175 % de $Mn_3O_4$

0 à 0,25 % de $CeO_2$.

Il n'y a donc pas de strontium dans ces compositions.

La poudre ainsi obtenue est pressée sous forme de disques d'épaisseur 1 mm et de diamètre 8 mm.

Le frittage est effectué dans un four électrique à des températures comprises entre 1300° et 1380°C et plus particulièrement vers 1350°C.

Après dépôt des électrodes en argent les disques sont mesurés en capacité et pertes diélectriques à la température de 20°C, et sous une tension de 1 volt à 1 kHz.

Le tableau 1 placé en fin de description permet de constater l'influence du cérium dans une composition. Un taux optimisé de cérium (en fonction de la plage de température désirée) permet de diminuer les pertes diélectriques, surtout à -55°C.

Exemple 2

On prépare dans les mêmes conditions que précédemment des mélanges en fixant les rapports de stoéchiométrie des phases principales aux valeurs suivantes :

$TiO_2/Bao = 0,932$ $Ba/CaO = 7,47$ $ZrO_2/CaO = 1,50$

Les compositions retenues sont les suivantes :

63,56 % à 63,37 % de $BaCO_3$

24,00 % à 23,93 % de $TiO_2$

7,954 % à 7,93 % de $ZrO_2$

4,314 % à 4,30 % de $CaCO_3$

0,172 % à 0,17 % de $Mn_3O_4$

0 % à 0,30 % de $CeO_2$

Il n'y a pas de strontium dans ces compositions.

Les résultats électriques sont exposés au tableau 2 placé en fin de description. Le cérium a également une influence bénéfique sur les pertes diélectriques qui diminuent lorsque son taux augmente de 0 à 0,3 % (en oxyde).

Exemple 3

On prépare dans les mêmes conditions que précédemment des mélanges, en fixant les rapports de stoéchiométries aux valeurs suivantes :

$TiO_2/BaO = 0,932$ $ZrO_2/CaO = 1,70$ $BaO/CaO = 7,47$

Les compositions retenues sont les suivantes (en poids) :

62,89 à 62,626 % de $BaCO_3$

23,746 à 23,64 % de $TiO_2$

8,928 à 8,89 % de $ZrO_2$

4,266 à 4,248 % de $CaCO_3$

0,17 à 0,148 % de $Mn_3O_4$

0 à 0,448 % de $CeO_2$

Les résultats électriques sont exposés au tableau 3 placé en fin de description. Le taux optimum de $CeO_2$ se situe entre 0,15 et 0,225 % en poids.

Exemple 4

On prépare dans les mêmes conditions que précédemment des mélanges en fixant les rapports de stoéchiométries aux valeurs suivantes :

$TiO_2/BaO = 0,94$ $ZrO_2/CaO = 1,50$ $BaO/CaO = 7,00$

Les compositions retenues sont les suivantes (en poids) :

de 63,46 à 64,74 % de $BaCO_3$

de 24,14 à 23,87 % de $TiO_2$

de 7,93 à 8,395 % de $ZrO_2$

de 4,30 à 4,545 % de $CaCO_3$

de 0,17 à 0,15 % de $Mn_3O_4$

de 0 à 0,30 % de $CeO_2$.

Il n'y a donc pas de strontium dans ces compositions.

Les résultats obtenus sont exposés au tableau 4 placé en fin de description. En fonction des pertes diélectriques, on constate que le taux optimum de cérium est proche de 0,2 %.

Exemple 5

On réalise une composition diélectrique par mélange des carbonates de baryum, de calcium de strontium et les oxydes de titane, de zirconium, de manganèse et de cérium.

Les proportions des principaux constituants sont fixés de manière à obtenir une solution solide dont les rapports de stoéchiométrie sont les suivants :

$TiO_2/BaO = 0,94$ $ZrO_2/BaO = 1,70$ $BaO/CaO = 7,47$.

Les compositions retenues comprennent en poids :

de 62,65 % à 62,15 % de $BaCO_3$

de 0 % à 0,78 % de $SrCO_3$

de 4,25 % à 4,22 % de $CaCO_3$

de 23,84 % à 23,65 % de $TiO_2$
de 8,89 % à 8,83 % de $ZrO_2$
0,17 % de $Mn_3O_4$
0,2 % de $CeO_2$

Les résultats électriques sont exposés au tableau 5 placé en fin de description. La présence de strontium permet d'obtenir des permittivités plus élevées que celles mesurées avec les compositions précédentes.

## Exemple 6

On réalise une solution solide par mélange des constituants suivants et synthèse thermique à 1150°C (2 heures) :
$BaCO_3$ (62,69 %), $TiO_2$ (23,35 %) $ZrO_2$ (9,33 %) $CaCO_3$ (4,26%), $Mn_3O_4$ (0,17 %), $CeO_2$ (0,2 %), proportions en poids.

Les matières premières (3 kg) sont mélangées dans une jarre en porcelaine avec 7 kg de bille de zircone, 2 litres de solvant, 200 g de polymétacrylate de méthyle pendant 15 heures. La barbotine ainsi obtenue est coulée sur un support rigide et lisse puis séchée afin d'obtenir une feuille plastique de céramique. A l'aide de cette feuille de céramique, on réalise des condensateurs multicouches constitués d'un empilement alterné de couches diélectriques céramiques et d'électrodes métalliques. Ces dernières sont déposées sur les feuilles de céramique selon la technique bien connue de la sérigraphie. Elles sont constituées de palladium pur. Les condensateurs ainsi réalisés comportent 21 couches métallisées ayant des fonctions d'armatures.

Les couches de rangs pairs et les couches de rangs impairs sont respectivement reliées entre elles après frittages par l'intermédiaire des terminaisons.

Les condensateurs sont frittés sous air à une température comprise entre 1350° C et 1380°C. Après dépôt des terminaisons et cuisson à basse température, les condensateurs multicouches sont testés électriquement et les résultats obtenus sont rassemblés dans le tableau 6 placé en fin de description.

Les valeurs de résistance d'isolement Ri, qui caractérise la conduction globale du condensateur multicouche, sont très satisfaisantes et le produit Ri (en $G\Omega$) X C (en nF) dépasse 1000 secondes.

## Exemple 7

On prépare dans les mêmes conditions que précédemment un mélange, en fixant les rapports de stoechiométrie aux valeurs suivantes :
$TiO_2/BaO = 0,92$ $ZrO_2/CaO = 1,78$ $BaO/CaO = 7,47$
La composition retenue est la suivante (en poids) :
62,06 % de $BaCO_3$
23,11 % de $TiO_2$
1,01 % de $SrCO_3$
4,22 % de $CaCO_3$
9,23 % de $ZrO_2$
0,17 % de $Mn_3O_4$
0,20 % de $CeO_2$

Les résultats électriques sont exposés au tableau 7 placé en fin de description.

De l'ensemble de ces exemples, on peut constater qu'un dopage judicieux effectué avec le manganèse et le cérium permet de diminuer les pertes diélectriques et d'obtenir une courbe en température respectant la norme Z5U. De plus la présence de strontium permet d'élever la constante diélectrique (ou permittivité $\varepsilon$).

Les valeurs de résistance d'isolement Ri sont également dans les normes requises.

5

TABLEAU 1

| Ce $O_2$ (%) | 0 | 0,1 | 0,15 | 0,2 | 0,25 |
|---|---|---|---|---|---|
| C (pF) à 20° C | 5900 | 4670 | 4200 | 4180 | 4060 |
| tg $\delta$ ($\times 10^{-4}$) à 20° C | 62 | 43 | 51 | 54 | 55 |
| $\varepsilon$ à 20° C | 11795 | 9286 | 8343 | 8076 | 8093 |
| $\frac{\Delta C}{C}$ (%) à 10° C | - 0,9 | - 2,6 | - 4,6 | - 4,5 | - 3,8 |
| à 85° C | - 63,1 | - 52,7 | - 49,8 | - 47 | - 49,3 |
| tg $\delta$ ($\times 10^{-4}$) à - 55°C | 377 | 245 | 170 | 140 | 138 |

EP 0 345 166 A1

TABLEAU 2

| CeO$_2$ (%) | 0 | 0,1 | 0,15 | 0,2 | 0,25 | 0,3 |
|---|---|---|---|---|---|---|
| C (pF) à 20°C | 5750 | 4220 | 3650 | 3260 | 2930 | 2420 |
| tg δ (x10$^{-4}$) à 20° C | 128 | 65 | 66 | 68 | 70 | 60 |
| ε à 20° C | 11056 | 8245 | 7113 | 6274 | 5679 | 4642 |
| $\frac{\Delta C}{C}$ (%) à 10° C<br>à 85° C | - 29,9<br>- 51,7 | - 26,6<br>- 39,2 | - 27,8<br>- 32,9 | - 18,4<br>- 39,5 | - 16,7<br>- 36,6 | - 13,7<br>- 31,6 |
| tg δ (x10$^{-4}$) à -55° C | 337 | 279 | 171 | 144 | 120 | 107 |

EP 0 345 166 A1

TABLEAU 3

| Ce $O_2$ (%) | 0 | 0,15 | 0,225 | 0,3 | 0,45 |
|---|---|---|---|---|---|
| C (pF) à 20° C | 5790 | 3910 | 4130 | 4700 | 5580 |
| tg $\delta$ (x$10^{-4}$) à 20° C | 62 | 45 | 45 | 45 | 56 |
| $\epsilon$ à 20° C | 10711 | 7593 | 8133 | 9546 | 11381 |
| $\frac{\Delta C}{C}$ (%) à 10° C | - 4,2 | - 5,1 | - 2,7 | + 1,9 | + 10 |
| à 85° C | - 60 | - 49,4 | - 53 | - 60,2 | - 70,4 |
| tg $\delta$ (x$10^{-4}$) à -55° C | 415 | 182 | 183 | 321 | 514 |

EP 0 345 166 A1

TABLEAU 4

| CeO$_2$ ( % ) | 0 | 0,2 | 0,3 |
|---|---|---|---|
| C (pF) à 20° C | 5110 | 4300 | 4360 |
| tg δ (x 10$^{-4}$) à 20° C | 121 | 56 | 55 |
| ε à 20° C | 11046 | 8374 | 9025 |
| $\frac{\Delta C}{C}$ (%) à 10° C<br>à 85° C | - 53,7<br>- 46,6 | - 11,1<br>- 41,6 | - 7<br>- 42,1 |
| tg δ (x 10$^{-4}$) à -55°C | 384 | 131 | 163 |

EP 0 345 166 A1

TABLEAU 5

| SrCO$_3$ (%) | 0 | 0,58 | 0,78 |
|---|---|---|---|
| C (pF) à 20° C | 4300 | 4260 | 4560 |
| tg δ (x10$^{-4}$) à 20° C | 56 | 42 | 44 |
| ε à 20° C | 8374 | 8613 | 9071 |
| $\frac{\Delta C}{C}$ (%) à 10° C <br> à 85° C | - 11,1 <br> - 41,6 | - 4,6 <br> - 51,7 | - 4,2 <br> - 53,3 |
| tg δ (x10$^{-4}$) à -55° C | 131 | 146 | 141 |

EP 0 345 166 A1

TABLEAU 6

| C (nF) à 20°C | 218,1 |
|---|---|
| tg δ (x10$^{-4}$) à 20°C | 100 |
| ε à 20° C | 6500 |
| $\frac{\Delta C}{C}$ (%) à 10°C | - 4,7 |
| à 85° C | - 50,8 |
| tg δ (x10$^{-4}$) à -55° C | 445 |
| Ri (100 V) en GΩ | 11 |

EP 0 345 166 A1

TABLEAU 7

| | |
|---|---|
| C (nF) à 20° C | 288,4 |
| tg δ (x$10^{-4}$) à 20° C | 130 |
| ε à 20° C | 8960 |
| $\dfrac{\Delta C}{C}$ (5‰) à 10°C à 85° C | + 0,5 <br> - 55,5 |
| tg δ ($10^{-4}$) à - 55°C | 527 |
| Ri (100 V) en G Ω | 33 |

12

## Revendications

1. Composition céramique à haute permittivité, la composition étant à base de titanate de baryum, caractérisée en ce qu'elle est élaborée à partir d'un mélange comprenant en poids 59 à 67 % de carbonate de baryum, 22 à 25 % d'oxyde de titane, 2 à 6 % de carbonate de calcium, 0 à 1,1 % de carbonate de strontium, 5 à 11 % d'oxyde de zirconium, le mélange comprenant également des adjuvants permettant d'introduire dans la composition du manganèse et du cérium.

2. Composition céramique selon la revendication 1, caractérisée en ce que le manganèse est introduit sous forme d'oxyde $Mn_3O_4$ ou de nitrate.

3. Composition céramique selon l'une des revendications 1 ou 2, caractérisée en ce que le cérium est introduit sous forme d'oxyde $CeO_2$.

4. Composition céramique selon la revendication 3, caractérisée en ce que ledit mélange comprend, en poids, de 0,1 à 0,3 % de $Mn_3O_4$ et de 0,1 à 0,6 % de $CeO_2$.

5. Composition céramique selon l'une quelconque des revendications 1 à 4, caractérisée en ce que le rapport molaire $TiO_2/BaO$ est compris entre 0,91 et 0,97.

6. Composition céramique selon l'une quelconque des revendications 1 à 5, caractérisée en ce que le rapport molaire $BaO/CaO$ est compris entre 6 et 12.

7. Composition céramique selon l'une quelconque des revendications 1 à 6, caractérisée en ce que le rapport molaire $ZrO_2/CaO$ est compris entre 1,4 et 2.

8. Composition céramique selon l'une quelconque des revendications 1 à 7, caractérisée en ce que le rapport molaire $TiO_2/ZrO_2$ est compris entre 3 et 8.

9. Composition céramique selon l'une quelconque des revendications 1 à 8, caractérisée en ce que le rapport molaire $SrO/BaO$ est compris entre 0 et 0,03.

10. Condensateur caractérisé en ce qu'il comprend en tant que diélectrique une composition céramique selon l'une quelconque des revendications précédentes.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DATABASE DERWENT WORLD PATENT INDEX, AN 88-011898; "Dielectric ceramic compsn." & JP-A-62 276 705 (MURATA) 01-12-1987 * Résumé * | 1,3,10 | C 04 B 35/46 H 01 G 4/12 |
| X | DATABASE DERWENT WORLD PATENT INDEX, AN 83-30807K; "High dielectric constant barium titanate ceramic compsn.", & JP-A-58 028 102 (MATSUSHITA) 19-02-1983 * Résumé * | 1,3,10 | |
| A | DATABASE DERWENT WORLD PATENT INDEX, AN 79-81483B; "Barium titanate-type, reduced form semiconductor capacitor", & JP-A-54 125 500 (NICHICON) 28-09-1979 * Résumé * | 1,3 | |

**DOMAINES TECHNIQUES RECHERCHES (Int. Cl.4)**

C 04 B 35/46
H 01 G 4/12

Le présent rapport a été établi pour toutes les revendications

| Lieu de la recherche | Date d'achèvement de la recherche | Examinateur |
|---|---|---|
| LA HAYE | 09-08-1989 | DROUOT M.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)